# EUROPEAN PATENT SPECIFICATION

(11) **EP 0 515 222 B1**
(45) Date of publication and mention of the grant of the patent: **05.03.1997**
(21) Application number: 92304682.5
(22) Date of filing: 22.05.1992
(51) Int. Cl.: G11B 11/10

(54) **Magneto-optical storage device**
Magnetooptische Speichervorrichtung
Dispositif de stockage magnétooptique

(30) Priority: 23.05.1991 JP 118857/91; 23.05.1991 JP 118866/91
(43) Date of publication of application: 25.11.1992
(73) Proprietor: SHARP KABUSHIKI KAISHA, Osaka 545 (JP)
(72) Inventor: Ohta, Kenji, Kitakatsuragi-gun, Nara 636 (JP); Takahashi, Akira, Nara-shi, Nara 631 (JP); Nakajima, Junsaku, Yamatotakada-shi, Nara 635 (JP); Murakami, Yoshiteru, Nishinomiya-shi, Hyogo 662 (JP)
(74) Representative: Brown, Kenneth Richard

(56) References cited:
- EP-A- 0 304 873
- EP-A- 0 367 685
- EP-A- 0 376 375
- PATENT ABSTRACTS OF JAPAN vol. 16, no. 167 (P-1342) 22 April 1992 & JP-A-40 14 641
- PATENT ABSTRACTS OF JAPAN vol. 16, no. 5 (P-1295) 8 January 1992 & JP-A-32 28 238
- JAPANESE PATENTS ABSTRACTS (UNEXAMINED) Section EI, Week 9241, Derwent Publications Ltd., London, GB; Class T03, AN 92-337289 & JP-A-4 243 037
- JAPANESE PATENTS ABSTRACTS (UNEXAMINED) Section EI, Week 9243, Derwent Publications Ltd., London, GB; Class T03, AN 92-354884 & JP-A-4 258 829

## Description

### FIELD OF THE INVENTION

The present invention relates to a magneto-optical storage device on and from which information is recorded, erased and reproduced by a light beam such as a laser beam.

### BACKGROUND OF THE INVENTION

A magneto-optical storage device such as a magneto-optical disk has a configuration wherein, for example, the first dielectric layer, a recording layer, the second dielectric layer, a reflective layer and an overcoat layer are successively laminated on a substrate in this order.

The first and second dielectric layers are made up of, for example, AlN. The film thicknesses of the first and second dielectric layers are respectively arranged so that a light beam such as a laser beam, which has been incident thereon from the substrate side, is reflected with a predetermined reflective index, and so that the Kerr rotation angle of the reflected light beam is maximized. The magneto-optical storage device having the above arrangement is intended to prevent oxidation of the recording layer and to increase the Kerr rotation angle by utilizing the multiple reflection.

Amorphous rare-earth transition-metal alloys such as GdTbFe and TbFeCo are widely used for composing the recording layer. The recording layer is normally set to 15 nm - 25 nm in thickness.

On the other hand, in recent years, magneto-optical storage devices provided with a Pt/Co multi-layer film have been recognized as a medium for enabling magneto-optical recording with high density. The Pt/Co multi-layer film is constituted by Pt layers and Co layers that are alternately laminated one after the other. As is disclosed in Japanese Laid-Open Patent Application No. 2-263344, the Pt/Co multi-layer film exhibits the perpendicular magnetic anisotropy and provides a larger magnetic Kerr rotation angle with respect to light having a short wavelength than that made of a rare-earth transition-metal alloy.

Here, it is desirable for the Pt/Co multi-layer film to have a high coercive force in order to stably maintain recorded information. Some of those methods for manufacturing a Pt/Co multi-layer film with a high coercive force have been found in the abstracts of technical research reports of Japan Applied Magnetics Institute issued in 1989.

For example, according to a method described on page 55 in the abstracts, it is possible to obtain a Pt/Co multi-layer film with a high coercive force by increasing the pressure of Ar gas, which is used as a sputtering gas, during the manufacturing process of the Pt/Co multi-layer film through the sputtering method.

Moreover, according to a method described on page 56 in the abstracts, it is possible to obtain a Pt/Co multi-layer film with a high coercive force by forming it on a metal film having a fcc (face-centered cubic) structure, such as Pt and Pd, through the sputtering method.

In the case of adopting the aforementioned magneto-optical storage device using a rare-earth transition-metal alloy, since the Kerr rotation angle is greatly dependent on the film thicknesses of the first and second dielectric layers, even a small deviation of the film thickness from an appropriate setting value may decrease the Kerr rotation angle. This results in the problem that it is difficult to manufacture a magneto-optical storage device having stable performance.

Moreover, in the case of adopting the magneto-optical storage device wherein a Pt/Co multi-layer film is employed, the following problems have been encountered. As described in "IEEE TRANSACTIONS ON MAGNETICS", volume 25, number 5, page 3764, published in 1989, if the film thickness ratio between the Pt and Co layers of the Pt/Co multi-layer film (the film thickness of the Pt layer/that of Co layer) is increased, the Kerr rotation angle is conversely decreased, although a stable perpendicular magnetization is obtained. As a result, it is difficult to obtain a Pt/Co multi-layer film that has a stable perpendicular magnetization and also provides a large Kerr rotation angle to the incident light.

Furthermore, as to the manufacturing process of the Pt/Co multi-layer film, when a Pt/Co multi-layer film is produced under such a high pressure of Ar gas, a large number of pores are produced in the Pt/Co multi-layer film. In the case of forming a Pt/Co multi-layer film on a metal film having the fcc structure, if the metal film thickness is increased in order to increase the coercive force, the crystal grains of the Pt/Co multi-layer film are also grown in size. Therefore, when a magneto-optical storage device that has a Pt/Co multi-layer film manufactured through the above methods, is employed, noise might be caused during information reproduction due to the increased number of pores and the largeness of the crystal grains in the Pt/Co multi-layer film.

EP-A-0 376 375 and EP-A-0 304 873 each disclose a magneto-optical recording medium having a recording film comprising a stack of alternating platinum and cobalt layers.

### SUMMARY OF THE INVENTION

It is an object of the present invention to increase both the stability of the perpendicular magnetization and the Kerr rotation angle of a Pt/Co multi-layer film.

The present invention provides the magneto-optical storage device defined by claim 1. The sub-claims 2 to 8 relate to preferred embodiments of the invention.

In one preferred embodiment, since any portion of the Pt/Co multi-layer film nearer to the substrate has a stabler perpendicular magnetization than any other portion farther from the substrate, the magnetization of the Pt/Co multi-layer film becomes more stable in the perpendicular direction with respect to the Pt/Co multi-layer film even at a portion far away from the substrate. Therefore, a stabler perpendicular magnetization is attained even at a portion far away from the substrate.

Further, in the Pt/Co multi-layer film, any portion farther from the substrate exhibits a greater Kerr effect than any other portion nearer to the substrate. Thus, by projecting a light beam onto the Pt/Co multi-layer film from the side that exhibits the greater Kerr effect, a larger Kerr rotation angle can be obtained.

As described above, according to the present invention, it becomes possible to obtain a magneto-optical storage device having a stabler perpendicular magnetization and a larger Kerr rotation angle.

### BRIEF DESCRIPTION OF THE DRAWINGS

FIG. 1 is a schematic side view of a magneto-optical storage device in accordance with a first embodiment of the present invention;
FIG. 2 is a schematic side view of a magneto-optical storage device in accordance with a second embodiment of the present invention; and
FIG. 3 is a schematic side view of a magneto-optical storage device in accordance with a third embodiment of the present invention.

### DESCRIPTION OF THE EMBODIMENTS

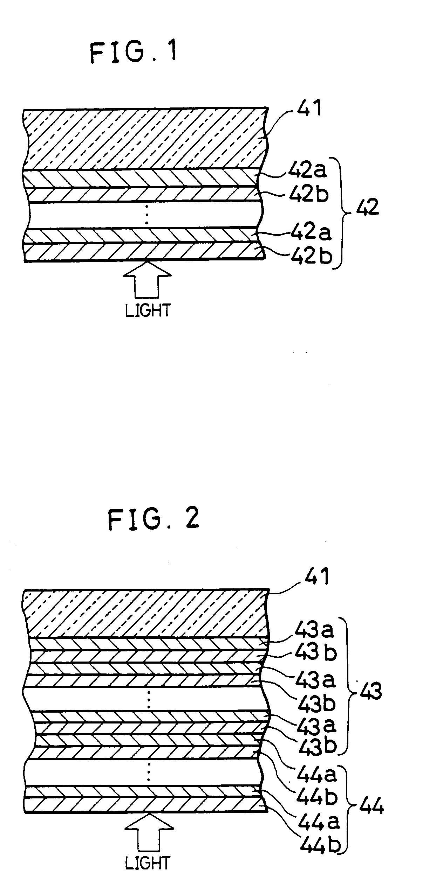

Referring to FIG. 1, the following description will discuss the first embodiment of the present invention.

As illustrated in FIG. 1, a magneto-optical storage device of the present embodiment is constituted by a substrate 41, made of glass or a resin such as polycarbonate, and a Pt/Co multi-layer film 42 formed on the substrate 41. A light beam is directed onto the Pt/Co multi-layer film 42 from the side farther from the substrate 41. The Pt/Co multi-layer film 42 has a configuration wherein Pt layers 42a and Co layers 42b are alternately laminated one after the other.

In the Pt/Co multi-layer film 42 of the magneto-optical storage device, the film thickness ratio of any adjacent pair of the Pt layer 42a and Co layer 42b (film thickness of the Pt layer 42a/that of the Co layer 42b) is not constant, but is set to become smaller in the departing order from the pair nearest to the substrate 41.

More specifically, for example, the film thickness of the Pt layer 42a that is located nearest to the substrate 41 is set to 1.5 nm (15 Å), and the film thicknesses of the other Pt layers 42a are set to successively become smaller in the departing order from the substrate 41, and then the film thickness of the Pt layer 42a that is located farthest from the substrate 41 is set to 0.6 nm (6 Å). On the other hand, the film thickness of the Co layers 42b is constant, and set to 0.5 nm (5 Å). Further, the total number of the Pt layers 42a and Co layers 42b is determined to be 20 - 100.

With this setting of the film thickness ratios, the Pt/Co multi-layer film 42 exhibits a stabler perpendicular magnetization at any portion nearer to the substrate 41 (hereinafter called the nearer layers) than at any other portion farther from the substrate 41 (hereinafter called the farther layers), while it exhibits a greater Kerr effect at the farther layers than at the nearer layers.

In the above configuration, a larger Kerr rotation angle can be obtained by projecting a light beam thereonto from the Pt/Co multi-layer film 42 side that exhibits the greater Kerr effect. Moreover, since the Pt/Co multi-layer film 42 exhibits a stabler perpendicular magnetization at the nearer layers than at the farther layers, the electron spin of Co layer 42b included in the farther layers becomes more stable when its direction becomes coincident with the direction of the electron spin of Co layer 42b included in the nearer layers, that is, the vertical direction to the Pt/Co multi-layer film 42. Therefore, even at a portion farther from the substrate 41, a stabler perpendicular magnetization is attained. Thus, this configuration makes it possible to obtain a magneto-optical storage device having a stabler perpendicular magnetization and a larger Kerr rotation angle with respect to a light beam with a short wavelength.

Referring to FIG. 2, the following description will discuss the second embodiment of the present invention. Here, for convenience of explanation, those of the components having the same functions and described in the first embodiment are indicated by the same reference numerals and the description thereof is omitted.

As illustrated in FIG. 2, a magneto-optical storage device of the present embodiment is mainly constituted by a substrate 41, the first Pt/Co multi-layer film 43 and the second Pt/Co multi-layer film 44, and a light beam is directed thereonto from the second Pt/Co multi-layer film 44 side. The magneto-optical storage device has a configuration wherein the first Pt/Co multi-layer film 43 is formed on the substrate 41, and the second Pt/Co multi-layer film 44 is formed on the first Pt/Co multi-layer film 43.

The first Pt/Co multi-layer film 43 has a configuration wherein Pt layers 43a and Co layers 43b are alternately laminated one after the other to form a laminated section, and the second Pt/Co multi-layer film 44 has a configuration wherein Pt layers 44a and Co layers 44b are alternately laminated one after the other to form another laminated section.

The film thickness ratio of the Pt layer 43a and the Co layer 43b (the film thickness of the Pt layer 43a/that of the Co layer 43b) in the first Pt/Co multi-layer film 43 is set to be greater than the film thickness ratio of the Pt layer 44a and the Co layer 44b (the film thickness of the Pt layer 44a/that of the Co layer 44b) in the second Pt/Co multi-layer film 44.

More specifically, for example, the film thicknesses of the Pt layer 43a and the Co layer 43b are set to 1.5 nm (15 Å) and 0.5 nm (5 Å) respectively, and the film thicknesses of the Pt layer 44a and the Co layer 44b are set to 0.6 nm (6 Å) and 0.5 nm (5 Å) respectively. Further, the total number of the Pt layers 43a and the Co layers 43b as well as the total number of the Pt layers 44a and the Co layers 44b, is determined to be 20 - 40.

With this setting of the film thickness ratios, the first Pt/Co multi-layer film 43 adjacent to the substrate 41 exhibits a stabler perpendicular magnetization than the second Pt/Co multi-layer film 44, and the second Pt/Co multi-layer film 44 located farther from the substrate 41 exhibits a greater Kerr effect than the first Pt/Co multi-layer film 43.

As illustrated in FIG. 2, in the above configuration, a larger Kerr rotation angle can be obtained by projecting a light beam thereonto from the side of the second Pt/Co, multi-layer film 44 that exhibits the greater Kerr effect. Moreover, since the second Pt/Co multi-layer film 44 is disposed on the first Pt/Co multi-layer film 43 having a stabler perpendicular magnetization, the magnetization of the second Pt/Co multi-layer film 44 becomes more stable when its direction becomes coincident with the direction of an easy axis of the magnetization of the first Pt/Co multi-layer film 43, that is, the vertical direction to the first Pt/Co multi-layer film 43. Therefore, a stable perpendicular magnetization of the second Pt/Co multi-layer film 44 is attained. Thus, this configuration makes it possible to obtain a magneto-optical storage device having a stabler perpendicular magnetization and a larger Kerr rotation angle with respect to a light beam with a short wavelength.

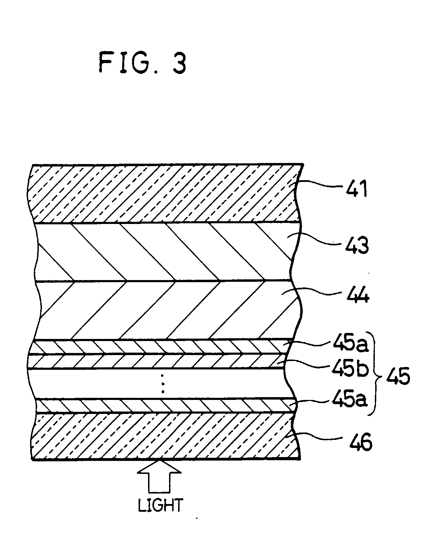

Referring to FIG. 3, the following description will discuss the third embodiment of the present invention. Here, for convenience of explanation, those of the components having the same functions and described in the first and second embodiments are indicated by the same reference numerals and the description thereof is omitted.

As illustrated in FIG. 3, a magneto-optical storage device of the present embodiment is mainly constituted by a substrate 41, the first Pt/Co multi-layer film 43 as a first laminated section and the second Pt/Co multi-layer film 44 as a second laminated section, the third Pt/Co multi-layer film 45 as a third laminated section and a transparent film 46, and a light beam is directed thereonto from the transparent film 46 side.

The third Pt/Co multi-layer film 45 is formed on the second Pt/Co multi-layer film 44 that is formed on the first Pt/Co multi-layer film 43 deposited on the substrate 41. The third Pt/Co multi-layer film 45 has a configuration wherein Pt layers 45a and Co layers 45b are alternately laminated one after the other. Further, the transparent film 46, made up of AlN or SiN, is formed on the third Pt/Co multi-layer film 45.

In the magneto-optical storage device of the present embodiment, the third Pt/Co multi-layer film 45 and the transparent film 46 as a protective layer are formed on the second Pt/Co multi-layer film 44, which forms a difference from the device described in the second embodiment.

The film thickness ratio of the Pt layer 45a and the Co layer 45b (the film thickness of the Pt layer 45a/that of the Co layer 45b) in the third Pt/Co multi-layer film 45 is set to be greater than the film thickness ratio of the Pt layer 44a and the Co layer 44b (the film thickness of the Pt layer 44a/that of the Co layer 44b) in the second Pt/Co multi-layer film 44. Moreover, the total number of the Pt layers 45a and the Co layers 45b in the third Pt/Co multi-layer film 45 is determined to be smaller than the total number of those layers of the first and second Pt/Co multi-layer films 43 and 44.

More specifically, for example, the film thickness of each of the Pt layers 43a and 45a is set to 1.5 nm (15 Å) while the film thickness of each of the Co layers 43b and 45b is set to be 0.5 nm (5 Å). Further, the film thicknesses of the Pt layer 44a and the Co layer 44b are set to 0.6 nm (6 Å) and 0.5 nm (5 Å) respectively. Here, the total number of the Pt layers 43a and the Co layers 43b as well as the total number of the Pt layers 44a and the Co layers 44b, is determined to be 20 - 40. The total number of the Pt layers 45a and the Co layers 45b is determined to be 4 - 18.

With this setting of the film thickness ratios, the second Pt/Co multi-layer film 44 comes to exhibit a greater Kerr effect than the first and third Pt/Co multi-layer films 43 and 45, and is sandwiched by the first and third Pt/Co multi-layer films 43 and 45, each having a stabler perpendicular magnetization than that of the second Pt/Co multi-layer film 44.

In the above configuration, a larger Kerr rotation angle can be obtained by projecting a light beam thereonto from the transparent film 46 side. More specifically, the light beam, having been transmitted through the transparent film 46, passes through the third Pt/Co multi-layer film 45, which is comparatively thin, and impinges onto the second Pt/Co multi-layer film 44 having a greater Kerr effect; thus, a larger Kerr rotation angle is obtained.

Moreover, since the second Pt/Co multi-layer film 44 is sandwiched by the first and third Pt/Co multi-layer films 43 and 45, each having a stabler perpendicular magnetization than that of the second Pt/Co multi-layer film 44, the magnetization of the second Pt/Co multi-layer film 44 becomes more stable when its direction becomes coincident with the direction of an easy axis of the magnetization of the first and third Pt/Co multi-layer films 43 and 45. Therefore, a stabler perpendicular magnetization of the second Pt/Co multi-layer film 44 is attained.

Thus, this configuration makes it possible to obtain a magneto-optical storage device having a stabler perpendicular magnetization and a larger Kerr rotation angle.

Additionally, one of the features of the present invention lies in that, in a Pt/Co multi-layer film, the film thickness ratio of a pair of adjacent Pt and Co layers located nearer to the side that is opposite the light-impinging side is set to be greater than the film thickness ratio of another pair of adjacent Pt and Co layers located nearer to the light-impinging side. Therefore, in the first through third embodiments, description has been given of those arrangements wherein a light beam is directed thereonto from the side opposite to the substrate 41; yet, the same nature of the magneto-optical storage devices described in the first through third embodiments can be attained by the use of arrangements wherein a light beam is directed thereonto from the substrate 41 side. One example of such arrangements of the magneto-optical storage device is given by reversing the locations of the first Pt/Co multi-layer film 43 and the second Pt/Co multi-layer film 44 in the configuration of the second embodiment.

However, when a stable perpendicular magnetization is first maintained by forming on the substrate 41 layers having a great film thickness ratio of Pt layers and Co layers, a further optimal magneto-optical storage device can be obtained.

## Claims

1. A magneto-optical storage device comprising a recording film (42;43,44;43,44,45) on a substrate (41), the recording film having a plurality of layers of platinum (42a;43a,44a;45a) and a plurality of layers of cobalt (42b;43b,44b;45b), said platinum layers and cobalt layers being arranged alternately, characterised in that the film thickness ratio of pairs of adjacent platinum and cobalt layers is not constant throughout the thickness of said recording film.

2. A magneto-optical storage device according to claim 1, wherein the film thickness ratio of platinum to cobalt of any pair of adjacent platinum (42a) and cobalt (42b) layers located relatively nearer to a side of the device that is opposite to a light-impinging side thereof, is greater than the corresponding film thickness ratio of any other pair of adjacent platinum (42a) and cobalt (42b) layers located relatively nearer to the light-impinging side of the device.

3. A magneto-optical storage device according to claim 2, wherein the opposite side to the substrate side (41) of the device is the light-impinging side.

4. A magneto-optical storage device according to claim 2, wherein the substrate side of the device is the light-impinging side.

5. A magneto-optical storage device according to claim 1, wherein the recording film includes a plurality of laminated sections (43,44;43,44,45), each constituted by alternately laminated platinum layers (43a,44a;45a) and cobalt layers (43b,44b;45b), each laminated section having a respective constant film thickness ratio of platinum to cobalt.

6. A magneto-optical storage device according to claim 5, wherein each laminated section (43,44) has a different film thickness ratio of platinum to cobalt from any other laminated section.

7. A magneto-optical storage device according to claim 5, comprising first, second and third said laminated sections (43,44,45) formed on the substrate (41) in this order, and wherein the film thickness ratios of platinum to cobalt of the first (43) and third (45) laminated sections are greater than the film thickness ratio of the second (44) laminated section.

8. A magneto-optical storage device according to claim 7, wherein the third laminated section (45) has an overall thickness smaller than that of the second laminated section (44), and the third laminated section (45) side of the device is the light-impinging side.

## Patentansprüche

1. Magnetooptische Speichervorrichtung mit einem Aufzeichnungsfilm (42; 43, 44; 43, 44, 45) auf einem Substrat (41), der eine Anzahl von Schichten aus Platin (42a; 43a, 44a; 45a) und eine Anzahl von Schichten aus Kobalt (42b; 43b, 44b; 45b) aufweist, wobei diese Platin- und Kobaltschichten abwechselnd angeordnet sind, **dadurch gekennzeichnet**, dass das Filmdickenverhältnis von Paaren benachbarter Platin- und Kobaltschichten über die Dicke des Aufzeichnungsfilms nicht konstant ist.

2. Magnetooptische Speichervorrichtung nach Anspruch 1, bei der das Filmdickenverhältnis von Platin zu Kobalt eines beliebigen Paars benachbarter Platin- (42a) und Kobaltschichten (42b), die relativ näher an derjenigen Seite der Vorrichtung liegen, die von der Lichtauftreffseite derselben abgewandt ist, größer ist als das entsprechende Filmdickenverhältnis jedes beliebigen anderen Paars benachbarter Platin- (42a) und Kobaltschichten (42b), die relativ näher an der Lichtauftreffseite der Vorrichtung liegen.

3. Magnetooptische Speichervorrichtung nach Anspruch 2, bei der die Seite entgegengesetzt zur Substratseite (41) der Vorrichtung die Lichtauftreffseite ist.

4. Magnetooptische Speichervorrichtung nach Anspruch 2, bei der die Substratseite der Vorrichtung die Lichtauftreffseite ist.

5. Magnetooptische Speichervorrichtung nach Anspruch 1, bei der der Aufzeichnungsfilm eine Anzahl von Laminatabschnitten (43, 44; 43, 44, 45) aufweist, von denen jeder aus abwechselnd aufeinanderlaminierten Platinschichten (43a, 44a; 45a) und Kobaltschichten (43b, 44b; 45b) besteht und jeder ein jeweiliges konstantes Filmdickenverhältnis von Platin zu Kobalt aufweist.

6. Magnetooptische Speichervorrichtung nach Anspruch 5, bei der jeder Laminatabschnitt (43, 44) ein anderes Filmdickenverhältnis von Platin zu Kobalt als jeder andere Laminatabschnitt aufweist.

7. Magnetooptische Speichervorrichtung nach Anspruch 5, mit einem ersten, zweiten und dritten Laminatabschnitt (43, 44, 45), die in dieser Reihenfolge auf dem Substrat (41) hergestellt sind, wobei die Filmdickenverhältnisse von Platin zu Kobalt für den ersten (43) und den dritten (45) Laminatabschnitt größer als das Filmdickenverhältnis für den zweiten (44) Laminatabschnitt sind.

8. Magnetooptische Speichervorrichtung nach Anspruch 7, bei der der dritte Laminatabschnitt (45) eine Gesamtdicke aufweist, die kleiner als diejenige des zweiten Laminatabschnitts (44) ist, und bei der die Seite des dritten Laminatabschnitts (45) die Lichtauftreffseite ist.

## Revendications

1. Dispositif de mémoire magnéto-optique comportant un film d'enregistrement (42; 43, 44; 43, 44, 45) sur un substrat (41), le film d'enregistrement étant constitué d'une pluralité de couches de platine (42a; 43a, 44a; 45a) et une pluralité de couches de cobalt (42b; 43b, 44b; 45b), lesdites couches de platine et lesdites couches de cobalt étant alternées, caractérisé en ce que le rapport d'épaisseurs de paires de couches adjacentes de platine et de cobalt n'est pas constant sur toute l'épaisseur dudit film d'enregistrement.

2. Dispositif de mémoire magnéto-optique selon la revendication 1, dans lequel le rapport d'épaisseurs de la couche de platine à la couche de cobalt de toute paire de couches adjacentes de platine (42a) et de cobalt (42b) relativement plus proche du côté opposé au côté d'impact de la lumière sur le dispositif est supérieur au rapport d'épaisseurs correspondant de toute autre paire de couches adjacentes de platine (42a) et de cobalt (42b) relativement plus proche du côté de l'impact de la lumière sur le dispositif.

3. Dispositif de mémoire magnéto-optique selon la revendication 2, dans lequel le côté opposé au substrat (41) du dispositif est le côté d'impact de la lumière.

4. Dispositif de mémoire magnéto-optique selon la revendication 2, dans lequel le côté du substrat (41) du dispositif est le côté d'impact de la lumière.

5. Dispositif de mémoire magnéto-optique selon la revendication 1, dans lequel le film d'enregistrement comprend une pluralité de structures stratifiées (43, 44; 43, 44, 45), chacune étant constituée de couches alternées de platine (43a, 44a; 45a) et de cobalt (43b, 44b; 45b), chaque structure stratifiée présentant respectivement un rapport constant d'épaisseurs des couches de platine aux couches de cobalt.

6. Dispositif de mémoire magnéto-optique selon la revendication 5, dans lequel chaque structure stratifiée (43, 44) a un rapport d'épaisseur des couches de platine aux couches de cobalt différent de celui de toute autre structure stratifiée.

7. Dispositif magnéto-optique selon la revendication 5, comportant lesdites première, deuxième et troisième structures stratifiées (43, 44, 45) déposées sur le substrat (41) dans cet ordre, et dans lequel les rapports d'épaisseurs des couches de platine aux couches de cobalt des première (43) et troisième (45) structures stratifiées sont supérieurs au rapport d'épaisseurs de la deuxième structure stratifiée (44).

8. Dispositif de mémoire magnéto-optique selon la revendication 7, dans lequel la troisième structure stratifiée (45) a une épaisseur globale inférieure à celle de la deuxième structure stratifiée (44) et le côté d'impact de la lumière sur le dispositif est celui de la troisième structure stratifiée (45).
